# EUROPÄISCHE PATENTANMELDUNG

(11) **EP 3 828 314 A1**
(43) Veröffentlichungstag der Anmeldung: **02.06.2021**
(21) Anmeldenummer: 19211775.2
(22) Anmeldetag: 27.11.2019
(51) Int. Cl.: C25B 1/12, C25B 9/08

(54) **ELEKTROLYSESYSTEM UND VERFAHREN ZUM BETREIBEN EINES ELEKTROLYSESYSTEMS**

(71) Anmelder: Siemens Aktiengesellschaft, 80333 München (DE)
(72) Erfinder: Waidhas, Manfred, 90427 Nürnberg (DE); Wolf, Erik, 91341 Röttenbach (DE)

(57) **Zusammenfassung**

Die Erfindung betrifft ein Elektrolysesystem zum elektrochemischen Zerlegen von Wasser zu Wasserstoff und Sauerstoff mit wenigstens einem Elektrolyseur zum elektrochemischen Zerlegen von Wasser zu Wasserstoff und Sauerstoff. Weiterhin umfassend das Elektrolysesystem eine Einhausungsvorrichtung zur Aufnahme des Elektrolyseurs, wobei der Elektrolyseur wenigstens teilweise in der Einhausungsvorrichtung angeordnet ist und die Einhausungsvorrichtung zu einem die Einhausungsvorrichtung umgebenden ersten Fluid dicht abgeschlossen ist. In dem Elektrolyseur wird Wasser zu Wassserstoff und Sauerstoff zerelgt. Der Wasserstoff und der Sauerstoff werden aus der Einhausungsvorrichtung geführt.

## Beschreibung

Die Erfindung betrifft einen Elektrolyseur zum Zerlegen von Wasser zu Wasserstoff und Sauerstoff und ein Verfahren zum Betreiben des Elektrolyseurs.

Ein Elektrolyseur ist eine Vorrichtung, die mit Hilfe von elektrischem Strom eine Stoffumwandlung herbeiführt (Elektrolyse). Entsprechend der Vielfalt an unterschiedlichen Elektrolysen gibt es auch eine Vielzahl von Elektrolyseuren, wie beispielsweise einen Elektrolyseur für eine Wasserstoffelektrolyse.

Aktuelle Überlegungen gehen dahin, mit Energie aus erneuerbaren Energiequellen in Zeiten mit viel Sonne und viel Wind, also mit überdurchschnittlicher Solarstrom- oder Windkrafterzeugung, Wertstoffe zu erzeugen. Ein Wertstoff kann insbesondere Wasserstoff sein, welcher mit Wasserelektrolyseuren erzeugt wird. Mittels des Wasserstoffs kann beispielsweise sogenanntes EE-Gas hergestellt werden.

Dabei erzeugt ein (Wasserstoffelektrolyse-) Elektrolyseur mit Hilfe der elektrischen Energie, insbesondere aus Windenergie oder Sonnenenergie, zunächst Wasserstoff. Danach wird der Wasserstoff in einem Sabatierprozess zusammen mit Kohlendioxid zur Herstellung von Methan verwendet. Das Methan kann dann beispielsweise in ein bereits vorhandenes Erdgasnetz eingespeist werden und ermöglicht so eine Speicherung und einen Transport von Energie zum Verbraucher und kann so ein elektrisches Netz entlasten. Alternativ dazu kann der vom Elektrolyseur erzeugte Wasserstoff auch unmittelbar weiterverwendet werden, beispielsweise für eine Brennstoffzelle.

Bei einem Elektrolyseur für die Wasserstoffelektrolyse wird Wasser in Wasserstoff und Sauerstoff zerlegt. Bei einem PEM-Elektrolyseur wird typischerweise anodenseitig destilliertes Wasser als Edukt zugeführt und an einer protonendurchlässigen Membran (engl.: "Proton-Exchange-Membrane"; PEM) zu Wasserstoff und Sauerstoff gespalten. Das Wasser wird dabei an der Anode zu Sauerstoff oxidiert. Die Protonen passieren die protonendurchlässige Membran. Kathodenseitig wird Wasserstoff produziert. Eine Elektrolyseeinheit umfasst typischerweise wenigstens vier Elektrolysemodule. Ein Elektrolysemodul umfasst typischerweise 50 Elektrolysezellen.

Ein Elektrolyseur wird typischerweise in Containern oder Gebäuden installiert, um ihn vor äußeren Einflüssen wie insbesondere Niederschlag zu schützen. Diese Container oder Gebäude werden belüftet. Das Belüften sorgt für einen Wärmeaustausch mit der Umgebung. Weiterhin erfolgt ein Luftaustausch mit einer Luftaustauschrate, die ausreicht, Gasleckagen zu neutralisieren und für ausreichend Kühlung zu sorgen. Die Belüftung erfolgt insbesondere kontinuierlich.

Nachteilig werden über den Luftaustausch während des Belüftens Staub, Salze oder unerwünschte Gase aus der Umgebung in den Container oder das Gebäude eingebracht. Dies kann nachteilig zu einem erhöhten Wartungsaufwand für den Elektrolyseur führen und die Lebensdauer eines Elektrolyseurs verkürzen. Weiterhin können nachteilig brennbare Gase innerhalb des Gebäudes oder Containers entstehen.

Aufgabe der vorliegenden Erfindung ist es daher, ein Elektrolysesystem und ein Verfahren zum Betreiben eines Elektrolysesystems anzugeben, welches die genannten Nachteile überwindet.

Die Aufgabe wird mit einem Elektrolysesystem gemäß Anspruch 1 und einem Verfahren zum Betreiben eines Elektrolysesystems gemäß Anspruch 9 gelöst.

Das erfindungsgemäße Elektrolysesystem zum elektrochemischen Zerlegen von Wasser zu Wasserstoff und Sauerstoff umfasst wenigstens einen Elektrolyseur zum elektrochemischen Zerlegen von Wasser zu Wasserstoff und Sauerstoff. Es umfasst weiterhin eine Einhausungsvorrichtung zur Aufnahme des Elektrolyseurs. Der Elektrolyseur ist dabei wenigstens teilweise in der Einhausungsvorrichtung angeordnet. Die Einhausungsvorrichtung ist zu einem ersten Fluid, welches die Einhausungsvorrichtung umgibt, dicht abgeschlossen.

Das erfindungsgemäße Verfahren zum Betreiben eines Elektrolysesystems zum Zerlegen von Wasser zu Wasserstoff und Sauerstoff umfasst mehrere Schritte. Zunächst wird ein Elektrolysesystem mit wenigstens einem Elektrolyseur zum elektrochemischen Zerlegen von Wasser zu Wasserstoff und Sauerstoff bereitgestellt. Das Elektrolysesystem umfasst weiterhin eine Einhausungsvorrichtung zur Aufnahme des Elektrolyseurs, wobei der Elektrolyseur wenigstens teilweise in der Einhausungsvorrichtung angeordnet ist und die Einhausungsvorrichtung zu einem die Einlassungsvorrichtung umgebenden ersten Fluid dicht abgeschlossen ist. Anschließend wird in dem Elektrolyseur Wasser zu Wasserstoff und Sauerstoff zerlegt. Der Wasserstoff und der Sauerstoff werden aus der Einhausungsvorrichtung herausgeführt.

Vorteilhaft ist der Elektrolyseur von einer äußeren Umgebung, die das erste Fluid aufweist, abgeschottet. Somit können keine unerwünschten Komponenten, wie Staub, Salze, insbesondere aus Meeresluft, oder Gase den Elektrolyseur kontaktieren oder sich mit dem den Elektrolyseur umgebenden Medium mischen. Vorteilhaft wird der Elektrolyseur somit von äußeren Einflüssen geschützt.

In einer vorteilhaften Ausgestaltung und Weiterbildung der Erfindung umfasst die Einhausungsvorrichtung einen Wärmetauscher zum thermischen Ausgleich der Temperatur in der Einhausungsvorrichtung und außerhalb der Einhausungsvorrichtung. Vorteilhaft wird somit gewährleistet, dass die Wärme, die während der Elektrolyse entsteht, aus dem Elektrolysesystem herausgetragen wird. Besonders vorteilhaft erfolgt das Abgeben der Wärme indirekt durch einen Wärmetauscher, sodass vorteilhaft vermieden wird, dass Komponenten mit der Umgebung ausgetauscht werden müssen.

In einer weiteren vorteilhaften Ausgestaltung und Weiterbildung der Erfindung weist das Elektrolysesystem wenigstens einen Sauerstoffsensor auf. Alternativ oder zusätzlich umfasst das Elektrolysesystem einen Wasserstoffsensor. Vorteilhaft kann so die Konzentration des Wasserstoffs und des Sauerstoffs detektiert werden, um Leckagen derart frühzeitig zu erkennen, dass Gegenmaßnahmen eingeleitet werden können.

In einer weiteren vorteilhaften Ausgestaltung und Weiterbildung der Erfindung ist in der Einhausungsvorrichtung ein chemischer Molekülfänger zum Reduzieren von Wasserstoff, Sauerstoff und/oder Wasser angeordnet. Dies stellt vorteilhafterweise insbesondere dann eine Gegenmaßnahme zu einem zu hohen Sauerstoffgehalt und/oder Wasserstoffgehalt im ersten Fluid dar. Auch eine zu hohe Feuchtigkeit, die dem Elektrolyseur Schaden kann, kann mithilfe des chemischen Molekülfängers reduziert werden. Vorteilhaft kann so vermieden werden, dass aufgrund einer Betauung Korrosion der Komponenten erfolgt, was wiederum zu einer erhöhten Kurzschlussgefahr führen kann. Die Komponenten müssen also nicht für eine Betauung ausgelegt sein, was vorteilhaft den Aufbau vereinfacht und die Kosten erniedrigt.

In einer weiteren vorteilhaften Ausgestaltung und Weiterbildung der Erfindung ist in der Einhausungsvorrichtung eine elektrochemische Wasserstoffpumpe angeordnet. Eine elektrochemische Pumpe transportiert bei Anlegen von elektrischem Strom Wasserstoff über eine Membran, insbesondere über eine Protonenaustauschmembran. Somit kann vorteilhaft über eine für andere Gase als Wasserstoff gasdichte Membran selektiv Wasserstoff vom Inneren der Einhausungsvorrichtung nach außen transportiert werden.

In einer weiteren vorteilhaften Ausgestaltung und Weiterbildung der Erfindung umfasst das Elektrolysesystem eine Brennstoffzelle. Die Brennstoffzelle wird mit Wasserstoff, insbesondere das Produkt des Elektrolyseurs, als Brennstoff und mit der Luft, also der Luft im Inneren der Einhausungsvorrichtung, als Oxidator betrieben. Dabei wird Sauerstoff aus der Luft verbraucht, woduruch die Abluft der Brennstoffzelle sauerstoffärmer ist als die Zuluft der Brennstoffzelle. Der Sauerstoffanteil kann vorteilhaft so weit reduziert werden, dass bei einer Wasserstoffleckage des Elektrolyseurs kein brennbares Gasgemisch gebildet werden kann. Vorteilhaft wird so die Betriebssicherheit des Elektrolysesystems erhöht.

In einer weiteren vorteilhaften Ausgestaltung und Weiterbildung der Erfindung umfasst das Elektrolysesystem eine Befüllvorrichtung zum Befüllen der Einhausungsvorrichtung mit dem zweiten Fluid. Inbesondere können vorteilhaft mittels der Befüllvorrichtung Volumenkompensationen insbesondere aufgrund eines veränderten Luftdrucks oder einer veränderten Temperatur durchgeführt werden. Die Befüllvorrichtung umfasst inbesondere mit Inertgas befüllte Durckgasbehälter.

In einer weiteren vorteilhaften Ausgestaltung und Weiterbildung der Erfindung umfasst das Elektrolysesystem eine Abtrennvorrichtung zum Entfernen von Wasser aus dem zweiten Fluid. Inbesondere umfasst die Abtrennvorrichtung ein Absorptionsbett oder ein Adsorptionsbett. Das Adsorptionsbett umfasst insbesondere ein Silicagel als Adsorptionsmittel. Die Abtrennvorrichtung kann auch als eine Kältefalle ausgestaltet sein. Es ist auch möglich mittels Wasserdampf-permeablen Membranen, insbesondere mittels GoreTex-Membranen, Wasser aus der Einhausungsvorrichtung zu transportieren. Vorteilhaft wird der Feuchteghalt des zweiten Fluids niedrig gehalten.

In einer weiteren vorteilhaften Ausgestaltung und Weiterbildung der Erfindung umfasst die Einhausungsvorrichtung eine Hülle, wobei in der Hülle eine fluiddicht abschließende Durchströmvorrichtung angeordnet ist. Diese fluiddicht abschließende Durchströmvorrichtung ermöglicht vorteilhaft ein diskontinuierliche Belüften der Einhausungsvorrichtung. Die Durchströmvorrichtung kann insbesondere eine Klappe, ein Ventil oder eine Pumpenöffnung sein.

In einer weiteren vorteilhaften Ausgestaltung und Weiterbildung der Erfindung umfasst der Elektrolyseur des Elektrolysesystems eine Peripherie, welche Leitungen und Wärmetauscher umfasst. Diese Peripherie ist in der Einhausungsvorrichtung angeordnet. Vorteilhaft werden somit nicht nur der Elektrolyseur sondern sämtliche Zu- und Ableitungen sowie Wärmetauscher von den äußeren Einflüssen der Umgebung geschützt. Somit werden vorteilhaft Wartungsabstände erniedrigt.

In einer weiteren vorteilhaften Ausgestaltung und Weiterbildung der Erfindung ist das erste Fluid eine Gasmischung, insbesondere Luft. Vorteilhaft schützt die Einhausungsvorrichtung insbesondere vor der Luft, die die Einhausungsvorrichtung umgibt. Diese kann, insbesondere in der Nähe von Raffinerien, brennbare Gase umfassen.

In einer weiteren vorteilhaften Ausgestaltung und Weiterbildung der Erfindung ist die Einhausungsvorrichtung mit einem zweiten Fluid befüllt. Das zweite Fluid ist insbesondere ein Gas oder eine Gasmischung. In anderen Worten heißt das, dass in der Einhausungsvorrichtung den Elektrolyseur umgebend ein Schutzgas angeordnet ist. Dieses Schutzgas ist insbesondere ein inertes Gas. Als inertes Gas können insbesondere Stickstoff, Kohlenstoffdioxid, unbrennbare FCKW Ersatzgase oder Edelgase eingesetzt werden.

In einer weiteren vorteilhaften Ausgestaltung und Weiterbildung der Erfindung wird als das zweite Fluid ein sauerstoffarmes oder sauerstofffreies Fluid eingesetzt. Vorteilhaft erhöht dies die Sicherheit des Elektrolysesystems zusätzlich, da kleine Leckagen von Wasserstoff ausgeglichen werden können.

In einer weiteren vorteilhaften Ausgestaltung und Weiterbildung der Erfindung weist das zweite Fluid eine andere Zusammensetzung als das erste Fluid auf.

In einer weiteren vorteilhaften Ausgestaltung und Weiterbildung der Erfindung ist ein erster Druck innerhalb der Einhausungsvorrichtung höher als ein zweiter Druck außerhalb der Einhausungsvorrichtung. Insbesondere beträgt der Unterschied zwischen dem ersten Druck und dem zweiten Druck weniger als 200 mbar, bevorzugt weniger als 50 mbar.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: ein Elektrolysesystem mit einem Elektrolyser umfassend eine Elektrolysezelle und einer Einhausungsvorrichtung,
- Figur 2: ein Elektrolysesystem mit einem Elektrolyseur umfassend eine Elektrolysezelle, einer Peripherie und einer Einhausungsvorrichtung.

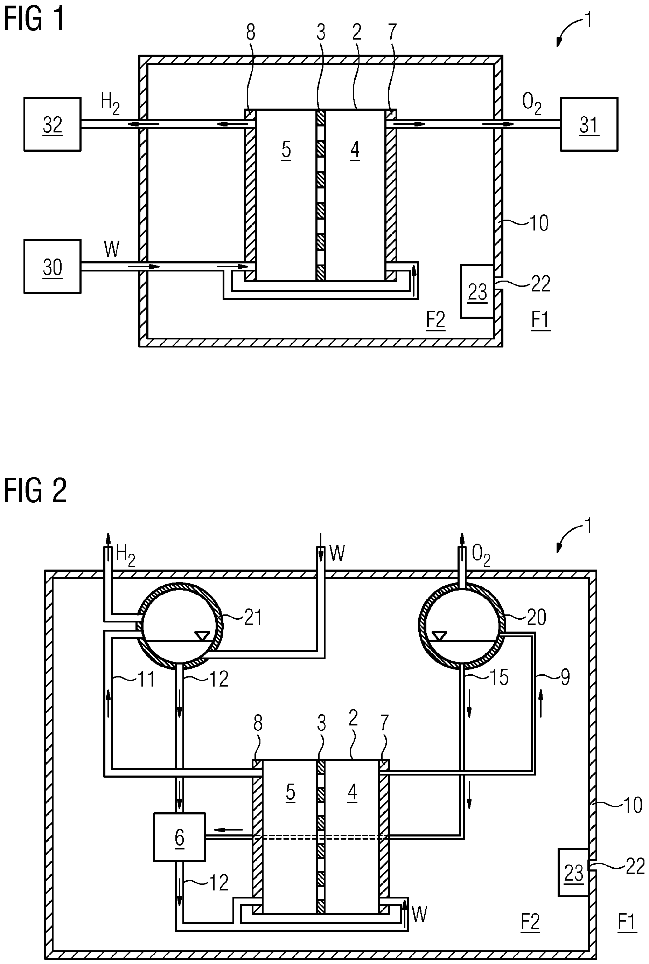

Figur 1 zeigt ein Elektrolysesystem 1 mit einer einem Elektrolyseur umfassend eine Elektrolysezelle 2 und einer Einhausungsvorrichtung 10. Ein Elektrolyseur umfasst typischerweise mehrere Elektrolysezellen 2. Diese Elektrolysezellen 2 werden insbesondere in Stacks angeordnet. Zum Zwecke der vereinfachten Darstellung, sind in den Figuren 1 und 2 jeweils nur eine Elektrolysezelle 2 gezeigt. Grunsätzlich wird in der Einhausungsvorrichtung 10 aber der gesamte Elektrolyseur angeordnet.

In der Einhausungsvorrichtung 10 ist die Elektrolysezelle 2 angeordnet. Die Elektrolysezelle 2 umfasst einen Anodenraum 4 und einen Kathodenraum 5. In dem Anodenraum 4 ist eine Anode 7 angeordnet. In dem Kathodenraum 5 ist eine Kathode 8 angeordnet. Wasser W fließt aus einer Wasserspeichervorrichtung 30 in den Anodenraum 4 und den Kathodenraum 5. Das Wasser W wird in der Elektrolysezelle 2 zu Wasserstoff H₂ und Sauerstoff O₂ zerlegt. Der Wasserstoff H₂ verlässt die Elektrolysezelle 2 und die Einhausungsvorrichtung 10. Er wird in eine Wasserstoffspeichervorrichtung geführt. Der Sauerstoff O₂ verlässt den Anodenraum 4 und wird in eine Sauerstoffspeichervorrichtung 31 geführt oder wird an die Umgebung außerhalb der Einhausungsvorrichtung 10 abgegeben. Die Durchgänge der wasserleitenden, wasserstoffleitenden und sauerstoffleitenden Leitungen durch die Einhausungsvorrichtung 10 sind fluiddicht ausgeführt. Außerhalb der Einhausungsvorrichtung 10 befindet sich ein erstes Fluid F1. Dieses Fluid ist insbesondere Luft, welche mit Salz oder Staub belastet ist. In der Einhausungsvorrichtung 10 befindet sich ein zweites Fluid F2. Das zweite Fluid F2 weist insbesondere ein Gasgemisch, welches sehr wenig oder keinen Sauerstoff umfasst, auf. Das zweite Fluid ist insbesondere Stickstoff.

Vorteilhafterweise wird die Elektrolysezelle 2 und die peripheren Leitungen somit durch äußere Einflüsse durch das erste Fluid F1 geschützt. Um einen Austausch von Wärme zu gewährleisten, ist an der Einhausungsvorrichtung 10 ein zweiter Wärmetauscher 23 angeordnet. In diesen kann mithilfe des Ventils 22 das erste Fluid F1 einströmen, um Wärme aus der Einhausungsvorrichtung 10 in die Umgebung zu transportieren.

Ebenso können in der Einhausungsvorrichtung 10 weitere Ventile angeordnet sein. Diese können insbesondere im Fall einer Wasserstoff- oder Sauerstoffleckage das zweite Fluid F2 in die Umgebung, also in das erste Fluid F1, ablassen. Dies ist in den Figuren nicht gezeigt.

Figur 2 zeigt ein zweites Ausführungsbeispiel eines Elektrolysesystems 1 mit einer Elektrolysezelle 2. In diesem zweiten Ausführungsbeispiel findet die Elektrolyse bei atmosphärischem Druck mit einem natürlichen Umlauf statt. Vorteilhaft sind somit keine, bzw. nur wenigen Pumpen nötig. Dieser Aufbau umfasst eine Peripherie, die insbesondere Leitungen und Abscheidevorrichtungen aufweist.

Nahezu alle Komponenten (mit Ausnahme der Stoffspeichervorrichtungen) sind in diesem Beispiel in einer Einhausungsvorrichtung 10 angeordnet. Die Einhausungsvorrichtung 10 schützt die Komponenten im Inneren der Einhausungsvorrichtung 10 insbesondere vor Staub oder Salz aus der Umgebung. Um die Einhausungsvorrichtung 10 herum befindet sich ein erstes Fluid F1. Dieses umfasst insbesondere Staub oder Salz. Im Inneren der Einhausungsvorrichtung 10 befindet sich ein zweites Fluid F2. Dies ist insbesondere eine Gasmischung, welche sehr wenig oder keinen Sauerstoff umfasst. Wie bereits im ersten Ausführungsbeispiel gezeigt, sind die Sauerstoffleitung, die Wasserstoffleitung und die Wasserleitung derart angeordnet, dass sie die Einhausungsvorrichtung 10 fluiddicht durchqueren. Das heißt, dass die Leitungen durch eine Öffnung in der Hülle der Einhausungsvorrichtung geführt werden und diese Öffnung anschließend fluiddicht verschlossen wird. Um einen Wärmetausch mit der Umgebung zu ermöglichen, ist an der Einhausungsvorrichtung 10, insbesondere an der Hülle der Einhausungsvorrichtung 10, ein zweiter Wärmetauscher 23 angeordnet. Dieser kann mithilfe eines Ventils von dem ersten Fluid F1 aus der Umgebung durchströmt werden, sodass das erste Fluid Wärme aus der Einhausungsvorrichtung 10 aufnehmen kann und an die Umgebung abgeben kann.

Die Elektrolysezelle 2 umfasst eine Protonenaustauschmembran 3, welche den Anodenraum 4 vom Kathodenraum 5 trennt. Der Anodenraum 4 umfasst eine Anode 7. Der Kathodenraum 5 umfasst eine Kathode 8. Im Anodenraum 4 wird an der Anode 7 Wasser W zu Sauerstoff O₂ oxidiert. Das während der Elektrolyse im Anodenraum 4 entstehende Sauerstoff-Wasser-Gemisch hat eine geringere Dichte als reines Wasser. Dadurch steigt es in der ersten Leitung 9, auch Steigrohr genannt, in eine erste Gasabscheidevorrichtung 20 auf. Die erste Gasabscheidevorrichtung 20 befindet sich oberhalb des Anodenraum 4. In der ersten Gasabscheidevorrichtung 20 trennt sich der Sauerstoff vom Wasser. Der Sauerstoff O₂ wird insbesondere in einen Sauerstoffspeicher (in der Abbildung nicht gezeigt) geführt. Das Wasser W wird über eine zweite Leitung 15 in einen ersten Wärmetauscher 6 geführt. Im Kathodenraum wird während der Elektrolyse an der Kathode 8 Wasser zu Wasserstoff H₂ reduziert. Das Wasserstoff-Wasser-Gemisch steigt aufgrund der niedrigeren Dichte im Vergleich zu Wasser W über eine dritte Leitung 11 in eine zweite Gasabscheidevorrichtung 21 auf. In der zweiten Gasabscheidevorrichtung 21 trennt sich der Wasserstoff H₂ vom Wasser W. Der Wasserstoff H₂ verlässt die Einhausungsvorrichtung 10 und wird bevorzugt in einen Wasserstoffspeicher geführt. Das Wasser W kann über eine vierte Leitung 12 in den ersten Wärmetauscher 6 geführt werden. Das Wasser W wird anschließend von dem ersten Wärmetauscher 6 aus zurück in den Anodenraum 4 und den Kathodenraum 5 geführt. Der erste Wärmetauscher 6 wird mit einem Kühlmittel, insbesondere Wasser, betrieben. Zwischen diesem Kühlmittel und dem Wasser aus der Elektrolyse findet kein Stoffaustausch statt. Der Kühlmittelzustrom und -abstrom aus dem ersten Wärmetauscher 6 ist der Übersicht halber nicht in Figur 2 gezeigt.

Vorteilhaft ist das Elektrolysesystem 1 dynamisch betreibbar, das heißt je nach Lasteintrag kann die Elektrolyseeinheit 1 mit einer Energiedichte von mehr als 0 A/cm² bis zu 4 A/cm², besonders bevorzugt von mehr als 1 A/cm² bis 3 A/cm², betrieben werden.

Die erste und die zweite Gasabscheidevorrichtung 20, 21 liegen auf einer zweiten Höhe. Die maximale Höhe der Elektrolysezelle liegt auf einer ersten Höhte. Die zweite Höhe liegt oberhalb der ersten Höhe. Dadurch kann allein aufgrund der im Elektrolyseur entstehenden Dichteunterschiede eine natürliche Umwälzung der Edukte und Produkte im Elektrolyseur gewährleistet werden. Beide Höhen müssen aber oberhalb der ersten Höhe der Elektrolysezelle liegen. Zusätzliche Pumpen oder andere Fördermittel sind vorteilhaft nicht nötig. Alternativ zu der hier gezeigten Ausführung, ist es auch möglich den Naturumlauf ausschließlich auf der Sauerstoffseite, also im Anodenraum 4 durchzuführen. Durch das auf der physikalischen Größe der Dichte basierende Prinzip des Naturumlaufs, reguliert sich die Wasserförderrate selbst. Das heißt, bei einer geeigneten Prozessgestaltung wird bei einer erhöhten Gasproduktionsrate die Wasserförderrate gesteigert, wodurch wiederum die Wärme vorteilhaft abgeführt wird.

Besonders vorteilhaft ist der Betrieb des Naturumlaufs bei einem atmosphärischen Druck, da hier die Gasblasengröße des Wasserstoffs und/oder Sauerstoffs und damit die resultierende Transportfähigkeit hinsichtlich der Gase und des Wassers ausreichend groß ist, sodass auf Pumpen vollständig verzichtet werden kann.

Die Wasserkreisläufe der Wasserstoff- und Sauerstoffseite, also des Wassers im Anodenraum 4 und im Kathodenraum 5 sind über den ersten Wärmetauscher 6 miteinander verbunden.

Aufgrund der Reaktionsgleichung der Wasserspaltung wird deutlich, dass etwa das doppelte Volumen an Wasserstoffgas wie Sauerstoffgas bei der Zerlegung des Wassers entsteht. Somit würde bei einem gleich gestalteten Rohrdurchmesser der Wasserstoffseite und der Sauerstoffseite, die Wasserstoffseite eine höhere Wasserförderrate als die Sauerstoffseite aufweisen, solange die Förderrate nicht durch den Rohrdurchmesser limitiert wird. Wird die Förderrate des Wassers durch das Steigrohr limitiert, so kann durch Anpassung des Steigrohrdurchmessers die Förderrate optimiert werden. Um somit den Wasserdurchfluss auf beiden Seiten zu optimieren, wird der erste Durchmesser der ersten Leitung 9 kleiner als der zweite Durchmesser der dritten Leitung 11 dimensioniert. Besonders vorteilhaft weist die erste Leitung 9 eine Querschnittsfläche von ungefähr der Hälfte der Querschnittsfläche der dritten Leitung 11 auf. Vorteilhaft kann im Vergleich zu einer konventionellen gleichartigen Rohrdurchmesserverteilung eine höhere Wasserförderrate, insbesondere auf der Anodenseite, erzielt werden.

### Bezugszeichenliste

- 1: Elektrolysesystem
- 2: Elektrolysezelle
- 3: Protonenaustauschmembran
- 4: Anodenraum
- 5: Kathodenraum
- 6: erster Wärmetauscher
- 7: Anode
- 8: Kathode
- 9: erste Leitung
- 10: Einhausungsvorrichtung
- 11: dritte Leitung
- 12: vierte Leitung
- 15: zweite Leitung
- 20: erste Gasabscheidevorrichtung
- 21: zweite Gasabscheidevorrichtung
- 22: Ventil
- 23: zweiter Wärmetauscher
- 30: Wasserspeichervorrichtung
- 31: Sauerstoffspeichervorrichtung
- 32: Wasserstoffspeichervorrichtung

- W: Wasser
- H₂: Wasserstoff
- O₂: Sauerstoff
- F1: erstes Fluid
- F2: zweites Fluid

## Patentansprüche

1. Elektrolysesystem (1) zum elektrochemischen Zerlegen von Wasser (W) zu Wasserstoff (H2) und Sauerstoff (02) mit:
- wenigstens einem Elektrolyseur (2) zum elektrochemischen Zerlegen von Wasser (W) zu Wasserstoff (H2) und Sauerstoff (O2),
- einer Einhausungsvorrichtung (10) zur Aufnahme des Elektrolyseurs (2), wobei der Elektrolyseur (2) wenigstens teilweise in der Einhausungsvorrichtung (10) angeordnet ist und die Einhausungsvorrichtung (10) zu einem die Einhausungsvorrichtung (10) umgebenden ersten Fluid (F1) dicht abgeschlossen ist.

2. Elektrolysesystem (1) nach Anspruch 1, wobei die Einhausungsvorrichtung (10) einen Wärmetauscher (23) zum thermischen Ausgleich der Temperatur in der Einhausungsvorrichtung (10) und außerhalb der Einhausungsvorrichtung (10) umfasst.

3. Elektrolysesystem (1) nach Anspruch 1 oder 2, wobei das Elektrolysesystem (1) wenigstens einen Sauerstoffsensor aufweist.

4. Elektrolysesystem (1) nach einem er vorhergehenden Ansprüche mit wenigstens einem Wasserstoffsensor.

5. Elektrolysesystem (1) nach einem der vorhergehenden Ansprüche, wobei in der Einhausungsvorrichtung (10) eine chemischer Molekülfänger zum Reduzieren von Wasserstoff, Sauerststoff und/oder Wasser angeordnet ist.

6. Elektrolysesystem (1) nach einem der vorhergehenden Ansprüche, wobei in der Einhausungsvorrichtung (10) eine elektrochemische Wasserstoffpumpe angeordnet ist.

7. Elektrolysesystem (1) nach einem der vorhergehenden Ansprüche, wobei die Einhausungsvorrichtung (10) eine Hülle umfasst, wobei in der Hülle eine fluiddicht abschließende Durchströmvorrichtung (22) angeordnet ist. (In Beschreibung: Durchströmvorrichtung kann Ventil, kann auch Klappe oder Pumpenöffnung sein.

8. Elektrolysesystem (1) nach einem der vorhergehenden Ansprüche, wobei eine Peripherie des Elektrolyseurs umfassend Leitungen (9, 11, 12, 15) und Wärmetauscher (6) in der Einhausungsvorrichtung (10) angeordnet ist.

9. Verfahren zum Betreiben eines Elektrolysesystems (1) zum Zerlegen von Wasser (W) zu Wasserstoff (H2) und Sauerstoff (02) mit folgenden Schritten:
- Bereitstellen des Elektrolysesystems (1) mit wenigstens einem Elektrolyseur (2) zum elektrochemischen Zerlegen von Wasser (W) zu Wasserstoff (H2) und Sauerstoff (02), mit einer Einhausungsvorrichtung (10) zur Aufnahme des Elektrolyseurs (2), wobei der Elektrolyseur (2) wenigstens teilweise in der Einhausungsvorrichtung (10) angeordnet ist und die Einhausungsvorrichtung (10) zu einem die Einhausungsvorrichtung (10) umgebenden ersten Fluid (F1) dicht abgeschlossen ist,
- Zerlegen von Wasser (W) zu Wasserstoff (H₂) und Sauerstoff (O₂) in dem Elektrolyseur (2),
- Herausführen des Wasserstoffs (H2) und des Sauerstoffs (02) aus der Einhausungsvorrichtung (10).

10. Verfahren nach Anspruch 9, wobei das erste Fluid (F1) eine Gasmischung, insbesondere Luft, ist.

11. Verfahren einem der Ansprüche 9 oder 10, wobei die Einhausungsvorrichtung (10) mit einem zweiten Fluid (F2) befüllt ist.

12. Verfahren nach einem der Ansprüche 9 bis 11, wobei als das zweite Fluid (F2) ein Gas oder eine Gasmischung verwendet wird.

13. Verfahren nach einem der Ansprüche 9 bis 12, wobei als das zweite Fluid (F2) ein sauerstoffarmes oder sauerstofffreies Fluid eingesetzt wird.

14. Verfahren nach einem der Ansprüche 9 bis 13, wobei das zweite Fluid (F2) eine andere Zusammensetzung als das erste Fluid (F 1) aufweist.

15. Verfahren nach einem der Ansprüche 9 bis 14, wobei ein erster Druck innerhalb der Einhausungsvorrichtung (10) höher ist als ein zweiter Druck außerhalb der Einhausungsvorrichtung (10).
